(19) Europäisches Patentamt
European Patent Office
Office européen des brevets

(11) Publication number: 0 432 911 A1

# (12) EUROPEAN PATENT APPLICATION

(21) Application number: 90312458.4

(22) Date of filing: 15.11.90

(51) Int. Cl.5: C08L 27/12, //(C08L27/12, 101:00)

(30) Priority: 16.11.89 US 438521

(43) Date of publication of application: 19.06.91 Bulletin 91/25

(84) Designated Contracting States: AT BE DE ES FR GB IT NL SE

(71) Applicant: MINNESOTA MINING AND MANUFACTURING COMPANY
3M Center, P.O. Box 33427
St. Paul, Minnesota 55133-3427(US)

(72) Inventor: Goebel, Kenneth D. c/o Minnesota Mining and
Manufact. Co., 2501 Hudson Road, P.O. Box 33427
St. Paul, Minnesota 55133-3427(US)
Inventor: Nelson, Paul N., c/o Minnesota Mining and
Manufact. Co., 2501 Hudson Road, P.O. Box 33427
St. Paul, Minnesota 55133-3427(US)
Inventor: Novak, Charles T., c/o Minnesota Mining and
Manufact. Co., 2501 Hudson Road, P.O. Box 33427
St. Paul, Minnesota 55133-3427(US)

(74) Representative: Baillie, Iain Cameron et al
c/o Ladas & Parry Isartorplatz 5
W-8000 München 2(DE)

## (54) Polymer blend composition.

(57) A blend composition comprising (a) 50 to about 90% of fluorinated elastomer, (b) 10 to about 50% of essentially fluorine-free thermoplastic polymer having a melt temperature or glass transition temperature greater than about 150 C (preferably greater than about 180 C). A curing agent can be mixed with the elastomer when the thermoplastic polymer is blended with the elastomer at an elevated temperature. Articles produced from the cured composition exhibit a continuous service temperature of at least 150 C (preferably at least 180 C) and a volume swell of less than about 150% in methanol and hydrocarbon fuels and oils. The composition and cured articles are reprocessable.

EP 0 432 911 A1

## POLYMER BLEND COMPOSITION

This invention relates to polymer blend compositions. More particularly, this invention relates to blends of fluorinated elastomers and thermoplastic polymers. In another aspect this invention relates to processes for molding or extruding such compositions and to the molded or shaped articles prepared by such processes.

Fluorinated elastomers are known materials and include elastomers such as fluorocarbon elastomers, fluorinated thermoplastic elastomers, fluorosilicone elastomers, and phosphonitrilic fluoroelastomers. See for example, West, A.C. and Holcomb, A.G., "Fluorinated Elastomers", Kirk-Othmer, Encyclopedia of Chemical Technology, Vol. 8, pp. 500-515, 3rd ed., John Wiley & Sons, 1979 and also U.S. Pat. 4,158,678 (Tatemoto et al.).

Fluorinated elastomers are thermally stable and exhibit chemical-and solvent-resistance. Such elastomers have many valuable industrial uses, such as O-rings, seals, gaskets, hoses, etc. However, the elastomers are costly, and the route to finished rubber products can be complex, often requiring preliminary mixing of fillers, curatives and other adjuvants with the elastomer gum. Also, additional shaping of certain articles, e.g., hoses, is required prior to vulcanization. The cure process can generate considerable quantities of non-reusable scrap and, in addition, cured articles cannot be reprocessed, e.g., by injection molding or extrusion.

In contrast, engineering thermoplastics such as nylons, acetals, polyesters, polyphenylenes, and polycarbonates, and specialty thermoplastics such as polysulfones, aromatic polyesters and polyamide-imides are readily processable and reprocessable, e.g., by injection molding or extrusion. They show a good balance of high tensile properties, compressive and shear strength, impact resistance, and retain their properties over a wide range of environmental conditions. However, these materials do not have elastomeric properties. See, for example, "Engineering Plastics", Kirk-Othmer, Encyclopedia of Chemical Technology, Vol. 9, p. 118 ff, 3rd ed., John Wiley & Sons, 1979.

Thermoplastic elastomers are known materials possessing both elastomeric and thermoplastic characteristics. These materials are becoming increasingly popular in industrial applications because of their ease of fabrication and general good physical properties. Thermoplastic elastomers are of two main types, (1) block and graft copolymers containing elastomeric and plastic polymer chain segments, and (2) blends of elastomers and thermoplastics. Examples of the latter class include blends of hydrocarbon elastomer and thermoplastic such as blends, of ethylene/propylene rubber (EPDM) with polyolefin thermoplastics, such as polypropylene or polyethylene. See for example, Coran, A. Y. and Patel, R., "Rubber-Thermoplastic Compositions., Part I," Rubber Chemistry and Technology, Vol. 53, p. 141 ff, Rubber Division, American Chemical Society, 1980; and also U.S. Patent No. 4,130,535 (Coran et al.). The elastomer blend component is often crosslinked to promote elasticity and improve the properties of the thermoplastic elastomer, such as reduced permanent set, improved ultimate mechanical strength, improved fatigue resistance, greater resistance to attack by fluids, improved high-temperature utility, etc. They can also be rapidly fabricated into finished parts using thermoplastic processing equipment, and vulcanization during fabrication into finished parts is not required. See, for example, Coran, A. Y., "Thermoplastic Elastomers Based on Elastomer-Thermoplastic Blends Dynamically Vulcanized", Thermoplastic Elastomers. A Comprehensive Review, Chapter 7, p. 133 ff, Edited by Legge, N. R., et al., Hanser Publishers, 1987.

Although the thermoplastic elastomers described above have many desirable properties, there is a need for thermoplastic elastomers with increased high temperature performance and improved fluid resistance, e.g., oil and alcohol resistance.

U. S. Patent No. 4,713,418 (Logothetis et al.) discloses blends of fluoroelastomers containing cure sites and a thermoplastic copolymer of tetrafluoroethylene. The useful level of thermoplastic is said to be from 2 to 50 parts per 100 parts of fluoroelastomer. The composition consists of the finely divided thermoplastic copolymer of tetrafluoroethylene dispersed in a matrix of amorphous fluoroelastomer.

European Patent Application 0168020 A2 (Pazos et al.) discloses blends of crystalline thermoplastic fluorocarbon resin as a continuous phase and a dispersed phase of an amorphous cured fluoroelastomer. The dispersed phase constitutes 50 to 90 percent by weight of the two phase composition.

P. M. Chacatrjan et al. in Acta Polymerica 37(7), pages 464-467 (1986), disclose polyvinylchloride blend compositions containing up to 30 weight percent of a fluorocarbon elastomer. The temperature dependency of the dynamic elastic modulus and mechanical loss factor were determined for two different fluoroelastomers.

Japanese Patent Application No. JP63-81159 (Ono et al.) discloses a thermoplastic elastomer composition comprised of (A) 99 - 1 wt. % polyetherester amide, and (B) 1 - 99 wt. % rubber components selected

from acrylic rubber, conjugated diene - vinyl cyan rubber and hydrorubber, and fluoro rubber. The fluoro rubber includes copolymers of vinylidene fluoride and hexafluoropropylene. Thus, the composition is a blend of elastomeric materials.

Japanese Patent Publication (B2) SHOU62-14574 (Miyata et al.) discloses an organic solvent solution of a blend or mixture of a fluoro rubber with 1 to 60 wt. % of acrylic polymer. The fluoro rubber includes vinylidene fluoride - hexafluoropropylene copolymer and vinylidene fluoride - hexafluoropropylene - tetrafluoroethylene copolymer. An example of acrylic polymer is a 50:50 copolymer of methyl methacrylate and n-butyl acrylate. Blends are prepared by mixing the solid polymers or by mixing solutions of the polymers in low molecular weight ketones. The solid composite can be used to make molded parts, or films cast from solution of the polymer blends. The acrylic polymer has a glass transition temperature much less than 150° C.

U. S. Patent No. 4,472,557 (Kawashima et al.) discloses a resin composition comprising 100 parts by wt. of polyvinylidene fluoride and 1 to 100 parts by wt. of an elastic fluorohydrocarbon resin. The fluorohydrocarbon resin consists essentially of a fluorine-containing elastomeric polymer having a glass transition temperature below room temperature and a second segment which comprises polyvinylidene fluoride and which is at least partly grafted to the first segment. No hydrocarbon plastic is present in the composition.

G. Moggi et al. in a paper presented at the International Rubber Conference, October 15-18, 1985 FULL TEXTS pages 838-843, disclose blends of fluoroelastomers (FKM) with different kinds of polymers, either amorphous or semicrystalline, from 1 to 10 phr. Data is reported on the effect of these polymeric additives on Mooney viscosity and curing behavior. The paper describes results with blends of "Technoflon" FOR 70 (copolymer of vinylidene fluoride and hexafluoropropylene) and the following polymers: polyvinylidene fluoride, polyethylene, polyethylene glycol, polyepichlorohydrin, etc. Due to the low levels of plastic polymers the blends do not exhibit good reprocessability.

Japanese Patent Application Kokai No. J62-218446 (Yamaguchi et al.) discloses blends of polyarylene sulfide, e.g., polyphenylene sulfide, and a thermoplastic fluoro resin rubber. The latter material is a block copolymer with more than one block of hard segment of mol. wt. of 2,000 - 500,000 (A), and more than 1 block of soft segment of mol. wt. of 20,000 - 1,500,000 (B) with a weight ratio of A/B of 5-60/40-95. Examples of the thermoplastic fluoro resin used include a soft segment (85%) from vinylidene fluoride/hexafluoropropylene/tetrafluoroethylene (mole ratio of 50/30/20) and a hard segment (15%) from hexafluoropropylene/tetrafluoroethylene (mole ratio 50/50). The weight of thermoplastic fluoro resin is disclosed as 0.1 - 60 parts for each 100 parts polyphenylene sulfide. These blends are plastic and not elastomeric.

U. S. Patent No. 4,395,512 (Kubota et al.) discloses a polyphenylene sulfide resin composition comprising 100 parts by weight of polyphenylene sulfide resin, 10-300 parts of inorganic filler and 1-100 parts fluororubbers (uncured), the fluororubbers having a specified viscosity. Preferred fluororubbers are copolymers of vinylidene fluoride and hexafluoro-propylene and copolymers of these monomers and tetrafluoro-ethylene. The compositions are said to have good mechanical properties, e.g., resistance to impact and cracking, and resistance to thermal shock.

None of the prior art fluoroelastomer compositions, including thermoplastic elastomer compositions, have the desired combination of high thermal stability, low solvent volume swell, excellent physical properties and ease of reprocessability.

Until now there has not been provided a blend composition of a fluorinated elastomer and a fluorine-free thermoplastic polymer having the advantages exhibited by the compositions of this invention.

In accordance with the present invention there are provided blend compositions comprising fluorinated elastomer and essentially fluorine-free thermoplastic polymer having a specified minimum melt temperature or glass transition temperature. The compositions are prepared by mixing the fluorinated elastomer and thermoplastic polymer at a temperature above the melting temperature of the thermoplastic polymer, or above the glass transition temperature if the thermoplastic polymer is amorphous.

In a preferred embodiment, the blend composition comprises:

(a) 50 to about 90% by weight of crosslinkable fluorinated elastomer; and

(b) 10 to about 50% by weight of essentially fluorine-free thermoplastic polymer having a melt temperature or glass transition temperature greater than about 150° C (preferably greater than about 180° C).

The blend compositions exhibit very good processing characteristics. For example, the compositions can be easily molded (e.g., injection molded or extruded) into any desired shape and configuration in a manner similar to conventional plastics. The fluorinated elastomer is usually at least partially cured before the composition is molded and shaped, e.g., it is cured sufficiently that the composition has enough

integrity to be self-supporting and to be able to retain its shape. In other words, the elastomer is usually at least partially cured or crosslinked in a dynamic stage (i.e., during the process by which the thermoplastic polymer is mixed with the elastomer).

The cured compositions exhibit very good tensile strength and solvent resistance in addition to exhibiting thermoplastic elastomer properties. Furthermore, the cured compositions are re-processable, i.e., they can be molded, extruded, or other-wise recycled without chemical modification. Thus, cured or scrap material of the composition may be cut, ground, or milled in order to obtain the desired particle size and then it can simply be fed to the processing equipment (e.g., molder or extruder) in normal fashion.

Because the compositions of this invention can be handled and processed similar to conventional thermoplastic materials, the speed of processing is more rapid than is possible using pure elastomer.

The blend compositions of the invention contain separate phases of cured (or subsequently cured) fluorinated elastomer and thermoplastic polymer. The tensile strength and solvent resistance of the cured composition are better than those exhibited by cured fluorinated elastomer alone.

Other advantages of the blend compositions of the invention will be apparent from the following detailed description.

The compositions of the invention include a crosslinkable fluorinated elastomer and an essentially fluorine-free thermoplastic polymer having a melt temperature or a glass transition temperature greater than about 150°C. (preferably greater than about 180°C.).

The crosslinkable elastomers useful in this invention are known fluorinated polymers or gums which include fluorocarbon elastomers (which include fluorinated thermoplastic elastomers for the purpose of this invention), fluorosilicone elastomers, and phosphonitrilic fluoroelastomers. Such elastomers are described, for example in West, A.C. and Holcomb, A.G., "Fluorinated Elastomers", Kirk-Othmer, Encyclopedia of Chemical Technology, Vol. 8, pp. 500-515, 3rd ed., John Wiley & Sons, 1979 and also U.S. Patent 4,158,678 (Tatemoto et al.). Such elastomers and suitable curing systems therefor are described, for example, in U.S. Patents 4,233,421 (Worm); 4,263,414 (Kolb); 4,446,270 (Guenthner); and 4,762,891 (Albin); and references cited therein.

Suitable curable fluorocarbon elastomers include copolymers of one or more terminally unsaturated fluorinated mono-olefins and optional hydrocarbon olefins selected, for example, from ethylene, propylene, and 1-butene. Blends or mixtures of two or more fluorocarbon elastomers can also be used in this invention, if desired.

Commercially available fluorocarbon elastomers which are useful herein include products sold under the tradenames "Fluorel", "Kel-F", "Viton", "Technoflon", "Aflas", "Miraflon" and "Dai-el". Among the polymers which may be used in accordance with this invention are the elastomeric copolymers of monomers selected from the group of vinylidene fluoride, hexafluoropropene, chlorotrifluoroethylene, 2-chloropentafluoropropene, fluorinated methyl vinyl ether, tetrafluoro-ethylene, 1-hydropentafluoropropene, dichlorodifluoroethylene, trifluoroethylene, 1,1-chlorofluoroethylene, 1,2-difluoro-ethylene, bromotrifluoroethylene, bromodifluoroethylene, and bromotetrafluorobutene.

These monoolefins may be copolymerized with each other in groups of two or more. They may also be copolymers with other olefinic compounds such as ethylene or propylene. The preferred elastomers are copolymers of vinylidene fluoride with at least one terminally unsaturated fluoromonoolefin containing at least one fluorine atom substituent on each double-bonded carbon atom, each carbon atom of said fluoromonoolefin being substituted only with fluorine, chlorine, hydrogen, lower fluoroalkyl radical, or lower fluoroalkoxy radical, particularly hexafluoropropene, tetrafluoroethylene, chlorotrifluoroethylene, and 1-hydropentafluoropropene. Particularly preferred are the fluorinated elastomers produced by copolymerizing vinylidene fluoride with hexafluoropropene as described in U.S. Patent Nos. 3,051,677 (Rexford) and 3,318,854 (Honn et al.), and those copolymers produced by copolymerizing vinylidene fluoride, hexafluoropropene, and tetrafluoroethylene as described in U.S. Patent No. 2,968,649 (Pailthorp et al.). The elastomeric copolymers of hexafluoro-propene and vinylidene fluoride having between about 15 and about 50 mole percent hexafluoropropene, optionally with the addition of up to 30 mole percent tetrafluoroethylene, are illustrative of this preferred class. Mixtures or blends of different fluorinated elastomers, and fluoroelastomers of different viscosities or molecular weights, are also suitable.

Curing or crosslinking of the fluorinated elastomer component in the blend composition is preferably carried out dynamically during the mixing operation with the thermoplastic polymer, above the melt or glass temperatures of the latter. Curing can be accomplished with conventional curing agents for fluorinated elastomers, and selection of curing agent or curing means will depend on the nature of the cure sites present in the polymer chains of the elastomer (i.e., cure sites present either in the backbone, or in pendant groups, or both).

Nucleophilic curing agents such as polyhydroxy and diamine compounds can be used for curing

fluorocarbon elastomers. Polyhydroxy compound curing agents and organo-onium accelerators (or co-curing agents) which are useful in this invention are described in U. S. Patent No. 4,882,390. Curing can also be accomplished using peroxide curing agents or by radiation, e.g., with a cobalt 60 source, or by electron beam radiation.

A preferred curing system useful in the present invention comprises the combination of a polyhydroxy compound and an organo-onium compound. The polyhydroxy compound is one which is capable of functioning as a crosslinking agent for the fluorocarbon elastomer. Such are well-known, and are described in the art, e.g., U.S. Patent Nos. 4,259,463 (Moggi et al.), 3,876,654 (Pattison), and 4,233,421 (Worm), and can include aromatic polyhydroxy compounds and aliphatic polyhydroxy compounds, and the derivatives of said compounds. Also, blends of polyhydroxy compounds may be used in this invention.

Representative aromatic polyhydroxy compounds include the following: di-, tri-, and tetrahydroxy-benzenes, naphthalenes, anthracenes and anthraquinones, and bisphenols of the formula

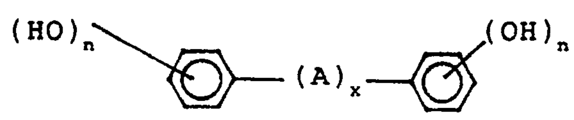

I

wherein A is a divalent aliphatic, cycloaliphatic or aromatic radical of 1 to 13 carbon atoms, or a thio, oxy, carbonyl, sulfinyl, or sulfonyl radical; A is optionally substituted with one or more chlorine or fluorine atoms; x is 0 or 1; n is 1 or 2; and any aromatic ring of the polyhydroxyl compound can be optionally substituted with at least one atom of chlorine, fluorine, or bromine, or carboxyl, or an alkyl, or an acyl (e.g., a -COR where R is a $C_1$ to $C_8$ alkyl, aryl, or cycloalkyl group) radical. It will be understood from the above bisphenol formula that the -OH groups can be attached in any position (other than number one, i.e., the carbon atoms where the A group is attached to the rings) in either ring. Specific aromatic polyhydroxy compounds include 4,4′-thiodiphenol, isopropylidene-bis(4-hydroxybenzene) (i.e., bisphenol A), hexafluoroisopropylidene-bis(4-hydroxybenzene), (i.e., bisphenol AF) and are described or illustrated in U.S. Patent No. 4,233,421 (Worm) and U.S. Patent No. 4,882,390.

Representative aliphatic polyhydroxy compounds include fluoroaliphatic diols, e.g., 1,1,6,6-tetrahydrooctafluorohex-anediol, and others such as those described in U.S. Patent No. 4,358,559 (Holcomb et al.) and references cited therein. Representative polyhydroxy derivatives of polyhydroxy compounds which can be used as crosslinking agents are described in U.S. Patent No. 4,446,270 (Guenthner et al.), and include, for example, 2-(4-allyloxyphenyl)-2-(4-hydroxyphenyl) propane.

Preferred polyhydroxy compounds are aromatic polyhydroxy compounds having formula (I) such as bisphenol A and bisphenol AF. A preferred aromatic polyhydroxy compound not included in Formula I is anthraflavic acid (i.e., 2,6-dihydroxyanthraquinone). A blend of two or more of the polyhydroxy compounds can be used in this invention. When changing from one polyhydroxy compound to another in a given composition, one skilled in the art will be able to select a curing time and temperature that will give a suitable rate of cure for a particular application.

The organo-onium compound which is useful as a co-curing agent or vulcanization accelerator for the fluorocarbon elastomer is the conjugate acid of a Lewis base (e.g., phosphine, amine, ether or sulfide) and can be formed by reacting said Lewis base with a suitable alkylating agent (e.g., an alkyl halide or acyl halide) or Lewis acid (e.g., nickel chloride, magnesium chloride, etc.), resulting in the expansion of the valence of the electron donating atom of the Lewis base and a positive charge on the organo-onium compound. Many of the organo-onium compounds useful in this invention contain at least one heteroatom, i.e., a non-carbon atom such as N, P, S, O, bonded to organic or inorganic moieties.

The organo-onium compounds suitable for use in this invention are known and are described in the art. See, for example, U.S. Patent Nos. 3,655,727 (Patel et al.); 3,712,877 (Patel et al.); 3,857,807 (Kometani); 3,686,143 (Bowman); 3,933,732 (Schmiegel); 3,876,654 (Pattison); 4,233,421 (Worm); 4,259,463 (Moggi et al.); 4,673,715 (Caywood); 4,833,212 (Yamada et al.); 4,748,208 (Kasahara et al.); 4,501,858 (Moggi); U.S. Patent No. 4,882,390; and also see West, A.C. and Holcomb, A.G. "Fluorinated Elastomers", Kirk-Othmer; Encyclopedia of Chemical Technology, Vol. 8, 3rd Ed., John Wiley & Sons, Inc., pp. 500-515 (1979). Mixtures of organo-onium compounds are also useful in this invention.

The organo-onium compounds include quaternary organo-onium compounds, such as those selected from the group consisting of ammonium, arsonium, phosphonium, stibonium, amino-phosphonium, phosphorane (e.g., triarylphosphorane), and iminium compounds. Organo-onium compounds also include sulfonium compounds.

One class of quaternary organo-onium compounds are organic compounds ionically associated with an anion, wherein at least one nitrogen, phosphorus, arsenic or antimony atom is covalently bonded to four organic moieties. In another class of quaternary organo-onium compounds the nitrogen, phosphorus, arsenic or antimony atom may be a heteroatom in a cyclic structure, e.g., 8-benzyl-1,8-diazobicyclo[5,4,0]-7-undecenium chloride.

One class of quaternary organo-onium compounds herein broadly comprises relatively positive and relatively negative ions (the phosphorus, arsenic, antimony or nitrogen atom generally comprising the central atom of the positive ion), these compounds being generally known as ammonium, phosphonium, arsonium, or stibonium salts or compounds preferably having the general formula:

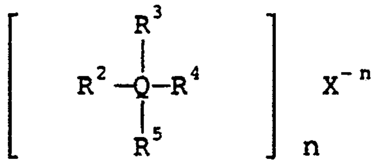 (II)

where Q is selected from the group consisting of nitrogen, phosphorus, arsenic, and antimony; X is an organic or inorganic anion (e.g., halide, sulfate, acetate, phosphate, phosphonate, hydroxide, alkoxide, phenoxide, bisphenoxide, etc.); n is equal to the valence of the anion X; and $R^2$, $R^3$, $R^4$, and $R^5$ are selected from the group of radicals consisting of alkyl, aryl, alkenyl, or combinations thereof. $R^2$, $R^3$, $R^4$ and $R^5$ can be substituted with chlorine, fluorine, bromine, cyano, -OR, and -COOR moieties where R is selected from the group consisting of $C_1$ to $C_{20}$ alkyl, aryl, aralkyl, alkaryl, and alkenyl. Any pair of said R groups can be connected with each other and the Q atom to form a heterocyclic ring. However, in compositions wherein the fluorocarbon elastomer is derived from vinylidene fluoride, tetrafluoroethylene and propylene, and the polyhydroxy compound is bisphenol AF, Q is phosphorus, X is a chloride anion, n is 1, three of the groups, $R^2$, $R^3$, $R^4$, and $R^5$ are phenyl moieties, the remaining R group cannot be a benzyl moiety.

A preferred class of quaternary organo-onium compounds has the general formula (II) and at least one of the groups $R^2$, $R^3$, $R^4$, or $R^5$ is alkyl or alkenyl. Representative of this preferred class are tetrabutylammonium chloride, tetrabutyl-ammonium bromide, tetrahexylammonium chloride, tetraheptyl-ammonium chloride, tetrapentylammonium chloride, (tributyl-allylphosphonium chloride,) tributylbenzylphosphonium chloride, dibutyldiphenylphosphonium chloride, tetrabutylphosphonium chloride and tributyl(2-methoxy)-propylphosphonium chloride compounds.

Another class of quaternary organo-onium compounds useful in this invention are amino-phosphonium compounds which are described in the art. See, for example, U.S. Patent No. 4,259,463 (Moggi et al.), and U.S. Patent No. 4,882,390.

Another class of quaternary organo-onium compounds useful in this invention are phosphorane compounds such as triaryl-phosphorane compounds; some of the latter compounds are known and are described in the art, see for example, U.S. Patent No. 3,752,787 (de Brunner), and also as described in U.S. Patent No. 4,882,390.

Another class of quaternary organo-onium compounds useful in this invention are iminium compounds. Such compounds useful in this invention are known and are described in U.S. Patent Nos. 4,748,208 (Kasahara) and 4,501,858 (Moggi), and U.S. Patent No. 4,882,390.

Additional representative organo-onium compounds include phenyltrimethylammonium chloride, tetrapropylammonium bromide, tetraheptylammonium bromide, tetramethylphosphonium chloride, tetramethylammonium chloride, tetrabutylammonium chloride, bromide, tetraphenylphosphonium chloride, tetraphenylarsonium chloride, tetraphenylstibonium chloride, 8-benzyl-1,8-diazobicyclo[5.4.0]7-undecenium chloride, benzyltris(dimethylamino)phosphonium chloride, and bis(benzyldiphenylphosphine)iminium chloride.

Sulfonium compounds useful in this invention are known and described in the art, e.g., see U.S. Patent No. 4,233,421 (Worm). Briefly described, a sulfonium compound is a sulfur-containing organic compound in which at least one sulfur atom is covalently bonded to three organic moieties having from 1 to 20 carbon atoms by means of carbon-sulfur covalent bonds and is ionically associated with an anion. Said organic moieties can be the same or different. The sulfonium compounds may have more than one relatively positive sulfur atom, e.g., $[(C_6H_5)_2S^+(CH_2)_4S^+(C_6H_5)_2]\ 2C1^-$, and two of the carbon-sulfur covalent bonds may be between the carbon atoms of a divalent organic moiety, i.e, the sulfur atom may be a heteroatom in a cyclic structure.

An additional useful class of organo-onium compounds includes divalent metal complexes of certain

bicyclo diamines. Examples include complexes of 1,8-diazabicyclo[5.4.0]undec-7-ene and 1,5-diazabicyclo-[4.3.0)non-5-ene with salts selected from magnesium chloride, nickel chloride, and zinc chloride. See U.S. 4,833,212 (Yamada et al.).

A further component in the curing system for the fluoroelastomer component of the blend composition is an acid acceptor. Acid acceptors can be inorganic or organic compounds. Organic acid acceptors include sodium stearate, and magnesium oxalate. However, acid acceptors are generally inorganic bases and include magnesium oxide, lead oxide, calcium oxide, calcium hydroxide, dibasic lead phosphite, zinc oxide, barium carbonate, strontium hydroxide, calcium carbonate, etc. The acid acceptors can be used singly or in combination and preferably are used in amounts ranging from 2 to about 30 parts per 100 parts by weight of the fluoroelastomer component. Particularly preferred compositions of this invention contain a 3:2 weight ratio mixture of calcium oxide and calcium hydroxide in amounts ranging from 7 to about 25 parts per 100 parts by weight of the fluoroelastomer component. Surprisingly, it has been determined that the use of these acid acceptors in the prescribed ratio and level will result in greater thermal stability of the cured composition.

The curable composition may also contain one or more antioxidant compounds. Such compounds are generally known, see for example, Nicholas, P.P., Luxeder, A.M., Brooks, L.A., Hommes, P.A., "Antioxidant and Antiozonants", Kirk-Othmer, Encyclopedia of Chemical Technology, Vol. 3, pp. 128-142, 3rd ed., John Wiley & Sons, 1978. Preferred antioxidants are those which, when incorporated in the curable composition, will result in an improvement in the thermal stability of the cured composition. Generally such preferred antioxidants have melting points greater than about 180° C and preferably greater than about 200° C. A representative class of the preferred antioxidant are the "amine-type" antioxidants, which may include ketone-amine condensation products, diaryldiamines, diarylamines, and ketone-diarylamine condensation products. One particularly useful diaryldiamine compound is di-beta-naphthyl-para-phenylene diamine, commercially available as "AGERITE WHITE" from the R.T. Vanderbilt Company, Inc. The antioxidants can be used in amounts ranging from 0 to 3 parts. Preferably 0.5 to 3 parts and most preferably 0.5 to 1.5 parts, per 100 parts by weight of the fluoroelastomer component. Generally, the greatest thermal stability of the curable composition can be achieved by using both antioxidant and a calcium oxide and calcium hydroxide mixture in the weight ratio described above.

The curable compositions may also contain one or more diorgano sulfur oxide compounds. Said diorgano compounds, when compounded with the other ingredients in the composition can function to increase the cure rate of the composition. Said diorgano compounds are known in the art and are described, for example, in U.S. Patent No. 4,287,320 (Kolb). Representative diorgano sulfur oxides include dimethylsulfone, tetramethylene sulfone, and bis(4-chlorophenyl) sulfone. Additional diorgano sulfur oxides are described in U.S. Patent No. 4,287,320 (Kolb).

Suitable thermoplastic polymers useful in this invention include those with melting points (or glass transition temperatures) greater than about 150° C, preferably greater than 180° C. Mixtures or blends of two or more thermoplastic polymers may also be used in this invention, of course.

Representative classes of useful thermoplastic polymers include, for example, polyamides (e.g., nylon 6, nylon 11, nylon 66, nylon 46, nylon 610, etc.), polyesters, polyimides, polyamideimides, polysulfones, polyetherimides, polycarbonates, polyethersulfones, polyetherketones, polyphenylenes, and mixtures thereof.

Table 1A lists some of such suitable thermoplastic polymers along with vendor or commercial source, known trade names, and published glass transition and melt temperatures for these polymers.

Table 1A.

| Thermoplastic polymers | | | | | |
|---|---|---|---|---|---|
| Code | Thermoplastic | Tradename | Source | Tg,C | Tm,C |
| P1 | Polybutylene terephthalate | -- | Aldrich | 66 | 227 |
| P2 | Polyphenylene sulfide | -- | Aldrich | 150 | 285 |
| P3 | Polyphenylene ether sulfone | VICTREX | ICI Americas | 224 | * |
| P4 | Polysulfone | UDEL | Amoco | 190 | * |
| P5 | Polyetherimide | ULTEM | GE Plastics | 217 | * |
| P6 | Polycarbonate | -- | Aldrich | 150 | 267 |
| P7 | Polydimethylphenylene oxide | -- | Aldrich | 211 | 268 |
| P8 | Polyetheretherketone | VICTREX | ICI Americas | 143 | 334 |
| P9 | Nylon 6 | ULTRAMID | BASF | 62.5 | 220 |
| P10 | Nylon 66 | VYDYNE | Monsanto | 45 | 267 |
| P11 | Nylon 11 | RILSAN | Atochem | 46 | 186 |
| P12 | Nylon 610 | TEXALON | Texapol | 40 | 215 |
| ***NOTE:** | | | | | |

P3, P4 and P5 are amorphous plastics and exhibit only a glass transition, i.e., softening temperature, as indicated.

Nylon 6 is poly(caprolactam) having the repeating backbone units [-NH(CH2)5CO-]n.

Nylon 66 is poly(hexamethylene adipamide) having the repeating backbone units [-NH(CH )6NHCO(CH2)4CO-]n.

Nylon 11 is poly(undecanoamide) having the repeating backbone units [-NH(CH2)10CO-].

Nylon 610 is poly(hexamethylene sebacamide) having the repeating backbone units [-NH(CH )6NHCO(CHn.

Other adjuvants and additives can also be present in the compositions and in some cases are necessary for best results. Such adjuvants and additives include acid acceptors, e.g., calcium and magnesium oxides, antioxidants, fillers or reinforcing agents, e.g., carbon black, silica, etc. Generally speaking, inert fillers should not be used in amounts exceeding about 30 parts by weight per 100 parts by weight of fluorocarbon elastomer in order to prevent loss of desirable physical properties.

Preferably, the fluoroelastomer should be cured either before, during or after melt mixing of the elastomer and the plastic components. The fluorocarbon elastomer gums used in the following examples are shown in Table 1B.

Table 1B.

| Fluoroelastomer gum composition | | | | | |
|---|---|---|---|---|---|
| -----Monomer composition, mole %--- | | | | | |
| Designation | $CH_2=CF_2$ | $CF_3CF=CF_2$ | $CF_2=CF_2$ | $CH_3CH=CH_2$ | Mooney * viscosity |
| A-0 | 80 | 20 | | | 0 |
| A-20 | 80 | 20 | | | 20*** |
| A-100 | 80 | 20 | | | 100 |
| A-115 | 80 | 20 | | | 115 |
| B-85 | 66 | 18 | 16 | | 85 |
| C-35 | 65 | 11 | 24 | | 35 |
| D-66 | 32 | | 41 | 27 | 66 |
| E | ("Dai-el" T-530)** | | | | |

*ML 1+10 @ 121 °C.
**A fluorinated thermoplastic elastomer block copolymer available from Daikin Industries, Ltd. The hard segment is ethylene/tetrafluoroethylene copolymer, and the soft segment is a vinylidene fluoride/hexafluoropropylene copolymer.
***ML 1+10 @ 100 °C.

The general thermoplastic elastomer formulation (Table 2), and procedures followed for compounding and curing, physical property determination, solvent swell property determination and reprocessing are given below. All amounts referred to therein and in all subsequent tables are in parts per 100 parts by weight of elastomer, abbreviated "phr" or in millimoles per 100 parts elastomer, abbreviated "mmhr".

Table 2

| Ingredient | Amount |
|---|---|
| Fluorocarbon elastomer gum | 100 |
| Magnesium oxide (phr) | 0 - 3 (pref. 0) |
| Calcium hydroxide (phr) | 0 - 20 (pref. 3-10) |
| Calcium oxide (phr) | 0 - 20 (pref. 4-15) |
| Antioxidant (phr) | 0 - 3 (pref. 0.5-1.5) |
| Plastic(s) (phr) | 10 - 50 (pref. 15 - 40) |
| Polyhydroxy (or polyamine) compound (mmhr) | 1 - 15 (pref. 3 - 10) |
| Onium compound * (mmhr) | 0.2 - 10 (pref. 1 - 4) |

*used with polyhydroxy compound

COMPOUNDING AND CURING.

The formulation ingredients are compounded by blending, in a Haake Rheocord Rheometer or other suitable mixing device (for example, Brabender or Banbury mixers, or compounding extruders), the fluorocarbon elastomer gum, the acid acceptors (magnesium oxide, calcium hydroxide and optional calcium oxide), and the thermoplastic (plastic) component(s) above the glass transition or melt temperature of the plastic(s) for 10 or more minutes. After about 10 minutes the polyhydroxy compound curing agent and onium accelerator (or alternatively, polyamine curing agent) are added while still blending. Crosslinking of the formulation is allowed to take place above the glass transition or melt temperature of the plastic(s) for an additional 15 minutes. For high Tm or Tg plastics, where mixing is carried out above about 260 °C, the blend is cooled and cured at about 260 °C. Alternatively, curing can be by radiation. In such case, the curing is performed after blending and preferably after shaping an article.

PHYSICAL PROPERTY DETERMINATION.

The resulting crosslinked thermoplastic elastomer is removed from the rheometer, cooled to room temperature (about 22°C), milled into a rough sheet on a two roll rubber mill, air dried at a temperature of about 150°C to 175°C for 60-120 minutes and compression molded into a smooth sheet about 2 mm thick at a pressure of 275 MPa (megaPascal) and at a temperature of 230 to 250°C. Test specimens are cut from the smooth thermoplastic elastomer sheets and the following physical properties measured:

| | |
|---|---|
| Tensile Strength at Break | ASTM D 412-75 |
| Elongation at Break | ASTM D 412-75 |
| Modulus at 100% Elongation | ASTM D 412-75 |
| Hardness | ASTM D 2240-85 Method A |

SOLVENT SWELL PROPERTIES.

Solvent swell properties are obtained on cured specimens of the thermoplastic elastomers in accordance with ASTM D-471 incorporated herein by reference, in methanol and Fuel C (isooctane/toluene 50/50) for 72 hours at 22°C, and in ASTM No. 3 Oil for 72 hours at 177°C.

THERMAL STABILITY.

The thermal stability of the curable composition is determined by placing a cured, 2.5 cm diameter x 0.3 cm thick sample of the curable composition in a circulating air oven at 260°C. Weight loss of the sample is determined after one hour in the oven and after 22 hours in the oven. The greater the weight loss of the sample after one hour and after 22 hours, the less thermally stable the curable composition.

PROPERTIES OF REPROCESSED THERMOPLASTIC ELASTOMER.

Original cured thermoplastic elastomer, and scrap from preparing the cut specimens, is remilled and compression molded into 2 mm thick sheets and physical properties and solvent swell properties measured.

The compositions of the invention exhibit:

(a) a "continuous service temperature" of at least 150°C, preferably at least 180°C; and

(b) a volume swell of less than about 150% in methanol and hydrocarbon fuels and oils, preferably less, than 100% in methanol and less than 25% in ASTM Fuel C and ASTM Oil No. 3.

"Continuous service temperature" is defined herein as the maximum temperature at which an article comprising the composition (e.g., an O-ring or seal) can function in an application without substantial degradation of performance over an extended period of time. This temperature is determined by measurement of physical-mechanical properties (such as are reported herein) after aging at various temperatures as a function of time. The continuous service temperature is the temperature where the tensile strength does not decrease by more than 50% after 1000 hours (or 40 days) at that temperature. All of the compositions of this invention exhibit a continuous service temperature of at least 150°C.

EXAMPLES. Comparative Ex. C1, C2, C3 and Ex. 1-5.

The composition and properties of several thermoplastic elastomer compositions of this invention are shown in Table 3, along with three comparative examples. No fluorine-free thermoplastic polymer was added to the composition in the comparative examples.

Table 3

| EXAMPLE | C1 | C2 | C3 | 1 | 2 | 3 | 4 | 5 |
|---|---|---|---|---|---|---|---|---|
| **Ingredients** | | | | | | | | |
| Fluorocarbon elastomer gum A-100 (a) | 100 | 100 | 100 | 100 | 100 | 100 | 100 | 100 |
| Magnesium oxide (b)(phr) | 3 | 3 | 3 | 3 | 3 | 3 | 3 | 3 |
| Calcium hydroxide (phr) | 6 | 6 | 6 | 6 | 6 | 6 | 6 | 6 |
| Bisphenol AF (mmhr) | 4.46 | 4.46 | 4.46 | 4.46 | 4.46 | 4.46 | 4.46 | 4.46 |
| Triphenylbenzyl phosphonium chloride (mmhr) | 1.29 | 1.29 | 1.29 | 1.29 | 1.29 | 1.29 | 1.29 | 1.29 |
| Carbon black (c) | | 30 | 30 | | | | | |
| Polybutylene terephthalate (d) (phr) | | | | 26 | | | | |
| Polyphenylene sulfide (e) (phr) | | | | | 26 | | | |
| Polyphenylene ether sulfone (f) (phr) | | | | | | 26 | | |
| Polysulfone (9) (phr) | | | | | | | 26 | |
| Polyetherimide (h) (phr) | | | | | | | | 26 |
| Rheometer mixing and cure temp., °C | 230-240 | 230-240 | i | 240-250 | 290-300j | 260-270 | 260-270 | 260-270 |
| Compression molding. temp., °C | 240 | 240 | i | 240 | 240 | 240 | 230 | 230 |
| Initial physical properties (22°C) | | | | | | | | |
| Tensile strength, MPa | 6.2 | 8.7 | 15.5 | 12.4 | 13.4 | 10.7 | 14.5 | 9.0 |
| 100 % Modulus, Mpa | 1.2 | 3.84 | 4.6 | 11.7 | 13.0 | 8.6 | 12.4 | 8.5 |
| Elongation, % | 362 | 196 | 244 | 110 | 110 | 150 | 140 | 130 |
| Hardness, Shore A2 | 53 | 68 | 72 | 87 | 79 | 81 | 89 | 85 |

| EXAMPLE | C1 | C2 | C3 | 1 | 2 | 3 | 4 | 5 |
|---|---|---|---|---|---|---|---|---|
| **Ingredients** | | | | | | | | |
| Methanol vol. swell, % | 214 | 147 | 101 | 76 | 102 | 130 | 106 | 175 |
| Fuel C vol. swell, % | 3.6 | 2.9 | 4.0 | 6.6 | 7.2 | 7.8 | 7.4 | 5.6 |
| ASTM 3 oil vol. swell, % | 2.8 | 1.8 | 3.0 | 1.6 | 2.7 | 2.9 | 4.1 | 1.7 |
| Reprocessed physical properties | | | | | | | | |
| Tensile strength, MPa | 3.5 | 3.0 | 11.0 | 12.9 | 11.2 | 8.8 | 13.6 | 9.6 |
| 100 % Modulus, MPa | 1.0 | 1.8 | 3.9 | 7.5 | 10.3 | 7.1 | 10.7 | 9.2 |
| Elongation at break, % | 468 | 371 | 215 | 228 | 114 | 169 | 173 | 125 |
| Hardness, Shore A2 | 53 | 68 | 67 | 85 | 80 | 81 | 88 | 85 |
| Methanol vol. swell, % | 450 | 460 | 116 | 98 | 141 | 174 | 143 | 173 |
| Fuel C volume swell, % | -0.6 | 1.8 | 3.0 | 3.5 | 3.8 | 3.7 | 4.3 | 2.5 |
| ASTM oil 3 vol. swell, % | 2.3 | 1.4 | 3.0 | 2.3 | 3.2 | 2.7 | 3.7 | 3.4 |

a. See fluorocarbon elastomer gum composition in Table 1B above.
b. MAGLITE D
c. ASTM N-990 ("Thermax" from J. M. Huber Corp.)
d. P1, Table 1A
e. P2, Table 1A
f. P3, Table 1A
g. P4, Table 1A
h. P5, Table 1A
i. Comparative Example C3 was conventionally (statically) cured into a thermoset rubber by compression molding at 275 MPa and 176°C for 20 minutes.
j. Mixing temp.; cure temp. was 260-270°C.

These examples 1-5 show the typical improvement in processing and physical properties of compositions of this invention when compared to comparative examples C1, C2 and C3, which have no plastic component in the formulation. There is significantly improved tensile strength, modulus and methanol resistance with plastic present, and the properties are largely retained upon reprocessing. Resistance to hydrocarbon solvents also is very good.

Pressed sheets of compositions of C1 and C2, both original and reprocessed, are rough and of variable thickness. On the other hand, compositions of Examples 1-5, and all other compositions of this invention (i.e., Examples 6-33), produced smooth, uniform sheets initially and upon reprocessing.

The original pressed sheet of example C3, which is conventionally (i.e., statically) cured (in contrast to the dynamically-cured rubber of example C2, having the same composition), is smooth and of uniform thickness, and has initial properties comparable to examples 1-5, which contain thermo-plastic polymer. However, reprocessing of the conventionally-cured composition of example C3, by remilling cured scrap and unused crosslinked rubber, was very difficult, requiring considerable time and effort. The resulting repressed sheet was rough, of variable thickness and warped. The properties of the reprocessed rough sheet showed significant degradation of properties compared to the initially processed sheet, as shown in Table 3.

Examples 6-13

These examples (Table 4) use various nylons and three other thermoplastics with fluorocarbon elastomer in blends of this invention.

Table 4

| EXAMPLE | 6 | 7 | 8 | 9 | 10 | 11 | 12 | 13 |
|---|---|---|---|---|---|---|---|---|
| **Ingredients** | | | | | | | | |
| Fluorocarbon elastomer gum A-100 (a) | 100 | 100 | 100 | 100 | 100 | | | |
| Fluorocarbon elastomer gum A-115 (a) | | | | | | 100 | 100 | 100 |
| Magnesium oxide (b)(phr) | 3 | 3 | 3 | 3 | 3 | 3 | 3 | 3 |
| Calcium hydroxide (phr) | 6 | 6 | 6 | 6 | 6 | 6 | 6 | 6 |
| Calcium oxide (phr) | | | | | | | 20 | 20 |
| Bisphenol AF (mmhr) | 4.46 | 4.46 | 4.46 | 4.46 | 7.44 | 2.23 | 2.23 | 2.23 |
| Triphenylbenzyl phosphonium chloride (mmhr) | 1.29 | 1.29 | 1.29 | 1.29 | 1.29 | 1.29 | 1.29 | 1.29 |
| Nylon 6 (c) (phr) | 26 | | | | | | | |
| Nylon 66 (d) (phr) | | 26 | | | | 43 | | |
| Nylon 610 (e) (phr) | | | 26 | | | | | |
| Nylon 11 (f) (phr) | | | | 26 | | | | |
| Polycarbonate (g) (phr) | | | | | 26 | | | |
| Polyphenylene sulfide (h) (phr) | | | | | | | 43 | |
| Polyphenylene ether sulfone (i) (phr) | | | | | | | | 43 |
| Rheometer mixing temp., °C | 230-240 | 260-270 | 230-240 | 230-240 | 275-285 | 260-270 | 290-300 | 290-300 |
| Rheometer cure temp., °C | 230-240 | 260-270 | 230-240 | 230-240 | 260-270 | 260-270 | 260-270 | 260-270 |

| EXAMPLE | 6 | 7 | 8 | 9 | 10 | 11 | 12 | 13 |
|---|---|---|---|---|---|---|---|---|
| **Ingredients** | | | | | | | | |
| Compression molding temp., °C | 240 | 240 | 240 | 240 | 240 | 240 | 240 | 240 |
| Initial physical properties (22°C) | | | | | | | | |
| Tensile strength, MPa | 21.4 | 15.6 | 21.7 | 16.7 | 12.1 | 6.2 | 3.5 | 5.3 |
| 100 % Modulus, Mpa | 20.3 | -- | 20.0 | 15.5 | 8.5 | 8.1 | 3.5 | 4.9 |
| Elongation, % | 105 | 85 | 115 | 115 | 172 | 200 | 160 | 180 |
| Hardness, Shore A2 | 90 | 90 | 90 | 90 | 80 | 73 | 72 | 80 |
| Methanol vol. swell, % | 77 | 82 | 73 | 63 | 136 | * | * | * |
| Fuel C vol. swell, % | 5.4 | 6.0 | 4.8 | 5.5 | 4.3 | * | * | * |
| ASTM 3 oil vol. swell, % | 2.3 | 1.9 | 1.7 | 2.1 | 1.8 | * | * | * |
| Reprocessed physical properties | | | | | | | | |
| Tensile strength, MPa | 18.1 | 16.3 | 18.2 | 16.9 | 12.5 | 5.4 | 5.7 | 7.9 |
| 100 % Modulus, MPa | 14.1 | 15.5 | 13.7 | 11.8 | 6.7 | 6.1 | 5.7 | 7.1 |
| Elongation at break, % | 148 | 109 | 162 | 188 | 197 | 180 | 170 | 150 |
| Hardness, Shore A2 | 89 | 90 | 91 | 90 | 76 | 72 | 75 | 77 |
| Methanol vol. swell, % | 92 | 86 | 78 | 95 | 169 | * | * | * |
| Fuel C volume swell, % | 0.8 | 4.0 | 4.3 | 3.2 | 7.0 | * | * | * |
| ASTM oil 3 vol. swell, % | 0.8 | 0.8 | 2.4 | 0.8 | 5.7 | * | * | * |

a. See Table 1B
b. MAGLITE D
c. P9, Table 1A
d. P10, Table 1A
e. P12, Table 1A
f. P11, Table 1A
g. P6, Table 1A
h. P2, Table 1A
i. P3, Table 1A
* not determined

These examples generally show the typical improvement in processing and physical properties with plastic present in the formulation, when compared to examples C1, C2 and C3. For examples 12 and 13, containing CaO, physical properties improve upon reprocessing, while for the other examples reprocessing results in only a small decrease.

## Examples 14-19

These examples (Table 5) use various thermoplastics with a fluorocarbon elastomer in blends of this invention.

## Table 5

| EXAMPLE | 14 | 15 | 16 | 17 | 18 | 19 |
|---|---|---|---|---|---|---|
| **Ingredients** | | | | | | |
| Fluorocarbon elastomer A-100 (a) | 100 | 100 | 100 | 100 | 100 | 100 |
| Magnesium oxide (b)(phr) | 3 | 3 | 3 | 3 | 3 | 3 |
| Calcium hydroxide (phr) | 6 | 6 | 6 | 6 | 6 | 6 |
| Bisphenol AF (mmhr) | 4.46 | 4.46 | 4.46 | 4.46 | 4.46 | 4.46 |
| Triphenylbenzyl phosphonium chloride (mmhr) | 1.29 | 1.29 | 1.29 | 1.29 | 1.29 | 2.06 |
| Polydimethylphenylene oxide(c) (phr) | 16 | | | | | |
| Polysulfone (d) (phr) | 10 | | | | | 10 |
| Polycarbonate (e) (phr) | | 20 | | | | |
| Nylon 6 (f) (phr) | | 6 | | | | |
| Polybutylene terephthalate (g) (phr) | | | 13 | | 13 | |
| Polyetherimide (h) (phr) | | | 13 | | | |
| Nylon 11 (i) (phr) | | | | 10 | | |
| Nylon 66 (J) (phr) | | | | 16 | | |
| Nylon 610 (k) (phr) | | | | | 13 | |
| Polyetherether ketone (1) (phr) | | | | | | 10 |
| Rheometer mixing temp., °C | 290-300 | 280-285 | 255-265 | 255-260 | 235-240 | 330-345 |
| Rheometer cure temp., °C | 270-280 | 265-270 | 255-265 | 255-260 | 235-240 | 240-240 |
| Compression molding temperature, °C | 240 | 240 | 240 | 240 | 240 | 240 |

**Table 5 cont...**

| **EXAMPLE** | **14** | **15** | **16** | **17** | **18** | **19** |
|---|---|---|---|---|---|---|
| <u>Ingredients</u> | | | | | | |
| Initial physical properties | | | | | | |
| Tensile strength, MPa | 9.0 | 11.8 | 9.7 | 17.1 | 16.3 | 7.0 |
| 100 % Modulus, MPa | 7.3 | 8.3 | 6.0 | 16.0 | 11.2 | 4.7 |
| Elong. at break, % | 128 | 166 | 236 | 112 | 175 | 209 |
| Hardness, Shore A2 | 78 | 81 | 82 | 87 | 89 | 73 |
| Methanol vol. swell,% | 159 | 128 | 201 | 111 | 85 | 202 |
| Fuel C vol. swell, % | 5.3 | 3.1 | 1.7 | 3.1 | 2.0 | 2.5 |
| ASTM oil 3 vol. swell,% | 5.2 | 0.7 | 1.8 | 1.5 | 2.0 | 3.0 |
| Reprocessed physical properties | | | | | | |
| Tensile strength, MPa | 7.9 | 13.5 | 7.4 | 16.61 | 5.9 | 6.3 |
| 100 % Modulus, MPa | 6.4 | 9.2 | 5.0 | 15.1 | 9.3 | 4.6 |
| Elongation at break, % | 162 | 164 | 267 | 119 | 230 | 209 |
| Hardness, Shore A2 | 79 | 82 | 84 | 87 | 88 | 72 |
| Methanol vol. swell, % | 192 | 129 | 176 | 107 | 84 | 218 |
| Fuel C volume swell, % | 5.0 | 2.9 | 3.9 | 2.5 | 4.2 | 4.4 |
| ASTM oil 3 vol. swell, % | 4.9 | 0.9 | 2.2 | 3.8 | 2.2 | 5.0 |

a. See Table 1B
b. MAGLITE D
c. P7, Table 1A
d. P4, Table 1A
e. P6, Table 1A
f. P9, Table 1A
g. P1, Table 1A
h. P5, Table 1A
i. P11, Table 1A
j. P10, Table 1A
k. P12, Table 1A
l. P8, Table 1A

These examples show the typical improvement in processing and physical properties when compared to examples C1, C2 and C3, which have no plastic component. There is little reduction of tensile strength and methanol resistance upon reprocessing.

These examples also show that more than one plastic can be mixed with the fluoroelastomer when an individual plastic does not have sufficient compatibility with the fluoroelastomer by itself. For example, the addition of polysulfone aids the compatibility of polydimethylphenylene oxide and polyetheretherketone (Ex. 14 & 19).

EXAMPLES 20-24

These examples (Table 6) employ various fluorocarbon elastomers and blends of two nylons as the plastic component.

Table 6

| Ingredients | Examples 20 | 21 | 22 | 23 | 24 |
|---|---|---|---|---|---|
| Fluorocarbon elastomer (a) | | | | | |
| A-0 | 100 | | | | |
| B-85 | | 100 | | | |
| C-35 | | | 23 | | |
| D-66 | | | | 100 | |
| E | | | | | 100 |
| A-20 | | | 77 | | |
| Magnesium oxide (b) (phr) | 3 | 3 | 3.9 | 3 | 3 |
| Calcium hydroxide (phr) | 6 | 6 | 7.8 | 6 | 6 |
| Bisphenol AF (mmhr) | 7.44 | 4.46 | 8.93 | 4.46 | 4.46 |
| Triphenylbenzyl phosphonium chloride (mmhr) | 1.29 | 1.29 | 1.29 | | 1.29 |
| Tributyl(methoxypropyl) phosphonium chloride (mmhr) | | | | 2.90 | |
| Nylon 610 (c) (phr) | 21 | 21 | 21 | 21 | 21 |
| Nylon 11 (d) (phr) | 5 | 5 | 5 | 5 | 5 |
| Rheometer mixing temp., °C | 230-240 | 235-240 | 235-240 | 235-240 | 235-240 |
| Rheometer cure temp., °C | 230-240 | 235-240 | 195-205 | 235-240 | 235-240 |
| Compression molding temp., °C | 240 | 240 | 240 | 240 | 240 |

Table 6 cont...

| Examples | 20 | 21 | 22 | 23 | 24 |
|---|---|---|---|---|---|
| **Ingredients** | | | | | |
| Initial physical properties | | | | | |
| Tensile strength, MPa | 7.8 | 10.1 | 13.1 | 7.1 | 18.2 |
| 100 % Modulus, MPa | 6.9 | 5.5 | 4.8 | 6.9 | 13.2 |
| Elong. at break, % | 142 | 306 | 300 | 138 | 211 |
| Hardness, Shore A2 | 80 | 86 | 72 | 84 | 91 |
| Methanol vol. swell, % | 159 | -- | 89 | 9.6 | 5.8 |
| Fuel C vol. swell, % | 3.1 | -- | 3.0 | 34 | 1.0 |
| ASTM oil 3 vol. swell, % | 2.0 | -- | 3.0 | 5.4 | 2.1 |
| Reprocessed physical properties | | | | | |
| Tensile strength, MPa | 9.7 | 8.4 | 13.1 | 7.2 | 17.9 |
| 100 % Modulus, MPa | 9.5 | 5.0 | 7.2 | 7.0 | 12.4 |
| Elongation at break, % | 117 | 258 | 233 | 134 | 225 |
| Hardness, Shore A2 | 85 | 87 | 78 | 85 | 91 |
| Methanol vol. swell, % | 148 | -- | 87 | 11.3 | 5.6 |
| Fuel C volume swell, % | 3.0 | -- | 3.0 | 35 | 1.1 |
| ASTM oil 3 vol. swell, % | 2.0 | -- | 3.0 | 8.0 | 0 |

a. See Table 1B
b. MAGLITE D
c. P12, Table 1A
d. P11, Table 1A

These examples show the typical improvement in processing and physical properties when compared to examples C1, C2 and C3. There is little or no reduction of tensile strength and methanol resistance upon reprocessing. They also demonstrate the general application of this invention to other types of fluorinated elastomers.

EXAMPLES 25-29

These examples (Table 7) employ various curing agents as well as irradiation as a curing means. Blends of two nylons comprise the plastic component. No cure accelerator (onium compound) was used in examples 28 and 29.

Table 7

| Examples | 25 | 26 | 27 | 28 | 29 |
|---|---|---|---|---|---|
| **Ingredients** | | | | | |
| Fluorocarbon elastomer A-100 (a) | 100 | 100 | 100 | 100 | 100 |
| Magnesium oxide (b) (phr) | 3 | 3 | 3 | 3 | 3 |
| Calcium hydroxide (phr) | 6 | 6 | 6 | 6 | 6 |
| Anthraflavic acid (mmhr) | 8.33 | | | | |
| 1,1,6,6-Tetrahydrooctafluoro-hexanediol (mmhr) | | 7.63 | | | |
| Bisphenol S (mmhr) | | | 8.0 | | |
| 1,6-Hexamethylene diamine carbamate (DIAK No. 1) (mmhr) | | | | 4.69 | |
| Radiation (c) | | | | | (c) |
| Triphenylbenzyl phosphonium chloride (mmhr) | 1.29 | 1.29 | 1.29 | | |
| Nylon 610 (d) (phr) | 21 | 21 | 21 | 21 | 21 |
| Nylon 11 (e) (phr) | 5 | 5 | 5 | 5 | 5 |
| Rheometer mixing temp., °C | 230-240 | 230-240 | 230-240 | 230-240 | 230-240 |
| Rheometer cure temp., °C | 230-240 | 230-240 | 230-240 | 230-240 | 230-240 |
| Compression molding temp., °C | 240 | 240 | 240 | 240 | 240 |

Table 7

| Examples | 25 | 26 | 27 | 28 | 29 |
|---|---|---|---|---|---|
| **Ingredients** | | | | | |
| Initial physical properties | | | | | |
| Tensile strength, MPa | 21.2 | 15.4 | 22.2 | 11.0 | 18.9 |
| 100 % Modulus, MPa | 17.9 | 11.5 | 18.4 | 11.4 | 10.9 |
| Elong. at break, % | 136 | 212 | 141 | 109 | 263 |
| Hardness, Shore A2 | 89 | 89 | 91 | 94 | 86 |
| Methanol vol. swell, % | 80 | 187 | 84 | 132 | 92 |
| Fuel C vol. swell, % | 2.8 | 2.9 | 2.5 | 2.2 | 2.2 |
| ASTM oil 3 vol. swell, % | 2.2 | 1.1 | 1.9 | 2.2 | 2.7 |
| Reprocessed physical properties | | | | | |
| Tensile strength, MPa | 18.8 | 9.5 | 20.1 | 8.5 | 13.1 |
| 100 % Modulus, MPa | 16.3 | 7.6 | 13.7 | 8.5 | 9.7 |
| Elongation at break, % | 131 | 228 | 193 | 113 | 203 |
| Hardness, Shore A2 | 89 | 87 | 92 | 90 | 85 |
| Methanol vol. swell, % | 79 | 160 | 91 | 123 | 124 |
| Fuel C volume swell, % | 3.0 | 3.8 | 3.4 | 1.9 | 3.0 |
| ASTM oil 3 vol. swell, % | 2.0 | 1.2 | 2.0 | 0 | 2.2 |

a. See Table 1B
b. MAGLITE D
c. 5 Mrad radiation from a cobalt 60 source
d. P12, Table 1A
e. P11, Table 1A

These examples show the typical improvement in processing and physical properties when compared to examples C1, C2 and C3. There is little reduction of tensile strength and methanol resistance upon reprocessing. They also demonstrate the general application of this invention to other types of curing agents.

EXAMPLES 30-33

These examples (Table 8) employ various cure accelerators. Blends of two nylons comprise the plastic component.

Table 8

| Examples | 30 | 31 | 32 | 33 |
|---|---|---|---|---|
| **Ingredients** | | | | |
| Fluorocarbon elastomer A-100 (a) | 100 | 100 | 100 | 100 |
| Magnesium oxide (b) (phr) | 3 | 3 | 3 | 3 |
| Calcium hydroxide (phr) | 6 | 6 | 6 | 6 |
| Bisphenol AF (mmhr) | 5.95 | 5.95 | 5.95 | 5.95 |
| Tetrabutyl ammonium iodide (mmhr) | 2.71 | | | |
| 1,8-Diazabicyclo[5.4.0]undec-7-ene: nickel chloride complex (mmhr) | | 0.59 | | |
| Benzyltris(dimethylamino) phosphonium chloride (mmhr) | | | 4.0 | |
| Tritolyl sulfonium chloride (mmhr) | | | | 4.0 |
| Nylon 610 (c) (phr) | 21 | 21 | 21 | 21 |
| Nylon 11 (d) (phr) | 5 | 5 | 5 | 5 |
| Rheometer mixing temp., °C | 230-240 | 230-240 | 230-240 | 230-240 |
| Rheometer cure temp., °C | 230-240 | 230-240 | 230-240 | 230-240 |
| Compression molding temp., °C | 240 | 240 | 240 | 240 |

Table 8 cont...

| Examples | 30 | 31 | 32 | 33 |
|---|---|---|---|---|
| **Ingredients** | | | | |
| Initial physical properties | | | | |
| Tensile strength, MPa | 14.1 | 20.1 | 19.0 | 21.0 |
| 100 % Modulus, MPa | 11.1 | 17.6 | 15.4 | 17.8 |
| Elong. at break, % | 204 | 130 | 143 | 123 |
| Hardness, Shore A2 | 90 | 92 | 92 | 88 |
| Methanol vol. swell, % | 188 | 80 | 58 | 77 |
| Fuel C vol. swell, % | 2.7 | 3.7 | 3.5 | 3.0 |
| ASTM oil 3 vol. swell, % | 2.2 | 3.2 | 3.2 | 1.0 |
| Reprocessed physical properties | | | | |
| Tensile strength, MPa | 15.1 | 19.5 | 15.3 | 15.3 |
| 100 % Modulus, MPa | 13.2 | 14.8 | 13.0 | 15.3 |
| Elongation at break, % | 162 | 167 | 135 | 98 |
| Hardness, Shore A2 | 88 | 88 | 94 | 92 |
| Methanol vol. swell, % | 168 | 89 | 69 | 71 |
| Fuel C volume swell, % | 3.0 | 2.8 | 3.0 | 2.9 |
| ASTM oil 3 vol. swell, % | 1.8 | 3.0 | 2.2 | 1.0 |

a. See Table 1B
b. MAGLITE D
c. P12, Table 1A
d. P11, Table 1A

These examples show the typical improvement in processing and physical properties when compared to examples C1, C2 and C3. There is little reduction of tensile strength and methanol resistance upon reprocessing. They also demonstrate the general application of this invention to other types of cure accelerators.

EXAMPLES 34-35

These examples (Table 9) demonstrate the improvement in thermal stability which can be achieved by incorporating a 3:2 weight ratio blend of calcium oxide and calcium hydroxide and an "amine-type" antioxidant in the curable composition. Blends of two nylons comprise the plastic component.

TABLE 9

| Examples | 34 | 35 |
|---|---|---|
| **Ingredients*** | | |
| Fluorocarbon elastomer (a) | | |
| A-20 | 77 | 77 |
| C-35 | 23 | 23 |
| Magnesium oxide (b) | 3 | |
| Calcium oxide | | 9.2 |
| Calcium hydroxide | 6 | 6.2 |
| Bisphenol AF, mmhr | 6.9 | 6.3 |
| Tributylallyphosphonium chloride, mmhr | 1.0 | 1.0 |
| Carbon black | | |
| N-990 | 1.4 | |
| N-326 | | 1.5 |
| Agerite White™ (c) | | 0.8 |
| Thermoplastic | | |
| Nylon 610(d) | 19 | 15.4 |
| Nylon 11 (e) | 3.8 | 3.8 |
| Rheometer mixing and curing temperature, °C | 230 | 230 |
| Thermal stability (2 hrs @ 260°C) | | |
| Total weight loss, wt. % | 8.4 | 4.4 |
| Average wt. loss, wt. %/hr. | 0.4 | 0.21 |

*phr, except as indicated

a. See Table 1B

b. MAGLITE D

c. Di-beta-naphthyl-paraphenylenediamine, available from R. T. Vanderbilt, Inc. (melting point about 224-230°C)

d. P12, Table 1A

e. P11, Table 1A

Other variations are possible without departing from the scope of this invention.

**Claims**

1. A blend composition comprising:
(a) 50 to about 90% by weight of crosslinkable fluorinated elastomer; and
(b) 10 to about 50% by weight of essentially fluorine-free thermoplastic polymer having a melt temperature or glass transition temperature greater than about 150°C.

2. A composition in accordance with claim 1, wherein said thermoplastic polymer is selected from the group consisting of polybutylene terephthalate, polyphenylene sulfide, polysulfone, polyetherimide, polycarbonate, polydimethylphenylene oxide, polyetheretherketone, and nylons.

3. A composition in accordance with any of claims 1 to 2, wherein said fluorinated elastomer comprises interpolymerized units derived from one or more terminally-unsaturated fluoromonoolefins.

4. A composition in accordance with any of claims 1 to 3, wherein said composition further comprises a curing agent for crosslinking said fluorinated elastomer.

5. A composition in accordance with claim 4, wherein said curing agent is a polyhydroxy compound.

6. A composition in accordance with claim 5, further comprising an organo-onium compound as an accelerator.

7. A composition in accordance with any of claims 1 to 6, wherein said composition, after curing, exhibits a continuous service temperature of at least about 150°C.

8. A composition in accordance with any of claims 1 to 7, wherein said composition, after curing, exhibits a volume swell of less than about 150% in methanol.

9. A composition in accordance with any of claims 1 to 8, wherein said fluorinated elastomer is crosslinked by means of radiation.

10. A composition in accordance with any of claims 1 to 9 further comprising a 3:2 weight ratio mixture of calcium oxide and calcium hydroxide wherein said calcium oxide and calcium hydroxide mixture is employed at a level of 7 to 25 parts by weight per 100 parts by weight of the fluorinated elastomer.

11. A composition in accordance with any of claims 1 to 10 further comprising di-beta-naphthyl-para-phenyldiamine employed at a level of 0.5 to 1.5 parts by weight per 100 parts by weight of the fluorinated elastomer.

European Patent Office

# EUROPEAN SEARCH REPORT

Application Number

**EP 90 31 2458**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 777 214 (M. PETERSEN)<br>* claims; examples *<br>– – – | 1-11 | C 08<br>L 27/12 //<br>(C 08 L 27/12<br>C 08 L<br>C 08 L 101:00 ) |
| X | EP-A-0 320 894 (E.I. DU PONT DE NEMOURS AND COMPANY)<br>* claims; examples *<br>– – – | 1-11 | |
| X,P | DATABASE WPIL, no. 90-249155, Derwent<br>& HU-A-52131 (ANONYMOUS) 28-06-1990<br>* abstract *<br>– – – – – | 1-11 | |
| | | | TECHNICAL FIELDS SEARCHED (Int. Cl.5) |
| | | | C 08 L |

The present search report has been drawn up for all claims

| Place of search | Date of completion of search | Examiner |
|---|---|---|
| The Hague | 15 February 91 | HOFFMANN K.W. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document